# EUROPEAN PATENT SPECIFICATION

(11) **EP 3 544 405 B1**
(45) Date of publication and mention of the grant of the patent: **23.06.2021**
(21) Application number: 17807798.8
(22) Date of filing: 21.11.2017
(51) Int. Cl.: A01B 69/04, A01B 79/00, A01D 34/86, A01D 75/18

(54) **MOTORIZED TOOL FOR AGRICULTURAL USE, PARTICULARLY OF THE ENERGY-SAVING TYPE**
MOTORISIERTES WERKZEUG FÜR DEN LANDWIRTSCHAFTLICHEN EINSATZ, INSBESONDERE VOM ENERGIESPARENDEN TYP
OUTIL MOTORISÉ À USAGE AGRICOLE, EN PARTICULIER DU TYPE À ÉCONOMIE D'ÉNERGIE

(30) Priority: 25.11.2016 IT 201600119524
(43) Date of publication of application: 02.10.2019
(73) Proprietor: Del Morino - S.r.l., 52033 Caprese Michelangelo (IT)
(72) Inventor: DEL MORINO, Andrea, 52033 Caprese Michelangelo (IT)
(74) Representative: Modiano, Micaela Nadia
(86) International application number: PCT/EP2017/079950
(87) International publication number: WO 2018/095919

(56) References cited:
- EP-A1- 1 108 351
- EP-A1- 2 591 654
- EP-A1- 2 939 513
- EP-A2- 2 340 701
- WO-A2-2013/009323
- DE-A1- 3 732 887

## Description

The present invention relates to a motorized tool for agricultural use, particularly of the energy-saving type, to the self-propelled agricultural machine on which said tool is installed, and to the corresponding method of operation.

Technological development, together with the ongoing search for simplification and automation of manual work, has led in recent decades to the creation of a series of self-propelled agricultural machines that consist substantially of a scale reproduction of agricultural tractors of the traditional type.

These miniaturized self-propelled agricultural machines, known more generally by the expression "lawn tractors", find multiple applications, both for private use and for professional use, where large power levels are not needed, also in favor of easier handling, which can be achieved by virtue of the reduced space occupations of these lawn tractors if compared with tractors of the traditional type.

Lawn tractors can then be equipped with a series of tools for agricultural use, some of which are mutually interchangeable, so as to be able to perform simply and quickly a series of operations that once were only feasible by hand, with enormous effort, or with accessories towed by animals, with all the associated limitations.

In recent years, in response to the increasingly felt problem of environmental pollution and thanks to the evolution of electrical and electronic technology, these lawn tractors have been equipped with motor means of the electric type powered by batteries instead of more traditional internal combustion engines, both for their propulsion and for the power supply of the tools with which they can be provided.

However, the transition from the combustion of hydrocarbons to the use of electric power has led to a considerable reduction in the endurance capacity of many tractors, with a significant weight increase due to the bulk of current batteries.

Fundamentally, a large fraction of the consumption of the electric power accumulated in the batteries on board the lawn tractor can be traced back to the fact that during normal use the generic tool for agricultural use, moved by using an electric motor, generally operates at a substantially constant rotation rate, with peaks in power demand and therefore in electric power absorption if the material to be processed is particularly demanding, and this inevitably leads to a reduction in the actual endurance of the batteries with respect to the nominal one.

Another drawback of lawn tractors of the known type resides in that since they can be used by personnel without particular qualifications and/or specialized knowledge of agricultural operations, they can be used on land which is uneven and contains objects that can deteriorate or even damage the movable elements of the tool for agricultural use with which they are equipped.

A further drawback of lawn tractors of the known type resides in that if the movable elements of the tool with which they are provided become jammed, there is the risk that the operator, for example by acting manually to free these movable elements and therefore by inserting his arm in the work area of the lawn tractor, might be injured accidentally as a consequence of the restart of the tool as soon as it is freed.

A motorized tool in accordance with the preamble of claim 1 is known from the document EP-A2-2 340 701.

The aim of the present invention is to provide a tool for agricultural use that overcomes the limitations of the background art described above, obviating the noted drawbacks.

Within this aim, an object of the present invention is to provide a tool for agricultural use of the motorized type that has a reduced energy consumption.

Another object of the present invention is to provide a tool for agricultural use that offers the greatest assurances of operation and reliability, at the same time offering a high level of safety to protect the operator in case of negligent and reckless behaviors on the part of said operator.

This aim, as well as these and other objects which will become better apparent hereinafter are achieved by a motorized tool for agricultural use, particularly of the energy-saving type, comprising the features of claim 1, as well as by a method for the safety and/or energy saving of the tool of claim 1.

Further characteristics and advantages of the invention will become better apparent from the description of a preferred but not exclusive embodiment of a motorized tool for agricultural use, particularly of the energy-saving type, according to the invention, illustrated by way of nonlimiting example in the accompanying two figures, which show schematically two possible operating situations of a self-propelled agricultural machine provided with a tool for agricultural use according to the present invention.

With particular reference to the figures, the self-propelled agricultural machine, particularly of the improved type, designated generally by the reference numeral 1, can be for example of the type with an electric drive and is equipped with at least one tool 2 for agricultural use of the motorized type which can consist for example of one of the following tools for agricultural use: shredders with a rotor having a horizontal axis, mowers and shredders with rotors having a vertical axis, static or movable mulchers for vehicles, rotary harrows, mechanical hoes and tillers.

Conveniently, said tool 2, which for the sake of graphic simplicity is shown schematically in the accompanying drawings as a cylinder with a horizontal axis with respect to its movable part 3 and can be motorized by virtue of motor means 4 of the electrical type associated with said movable part 3 for example by means of a belt drive 5, is provided with means for varying the working speed of said movable part 3 and can be installed selectively in the front part or in the rear part of the machine 1.

According to the invention, detection means 6 are provided arranged at the inlet of the work area of the movable part 3, which are adapted to detect objects 7a and 7b entering said work area and functionally associated with the variator means cited above so as to vary automatically the working speed of the movable part 3 between a working speed value equal to zero and a maximum speed value in relation to the presence and/or consistency of the objects 7a and/or 7b.

Furthermore, means for the electronic management of the variator means are provided which are functionally associated with the detection means 6 in order to process the measurement performed by said detection means and convert it into an analog or digital electrical signal which is associated with a predefined working speed value of the movable part 3 so as to allow to stop, increase and slow the working speed of the rotor of the tool 2 depending on the work area being processed.

Advantageously, these electronic management means comprise transducer means 8 which are associated directly with the detection means 6 and comprise at least one transducer of the mechanical type, for example of the rotary or linear type, and at least one contactless shape measurement transducer.

In greater detail, the detection means 6 comprise at least one movable element 9 which rotates integrally with a control rod 10 arranged above the inlet of said work area of the movable part 3 and transversely with respect to the approach direction of the objects 7a and/or 7b.

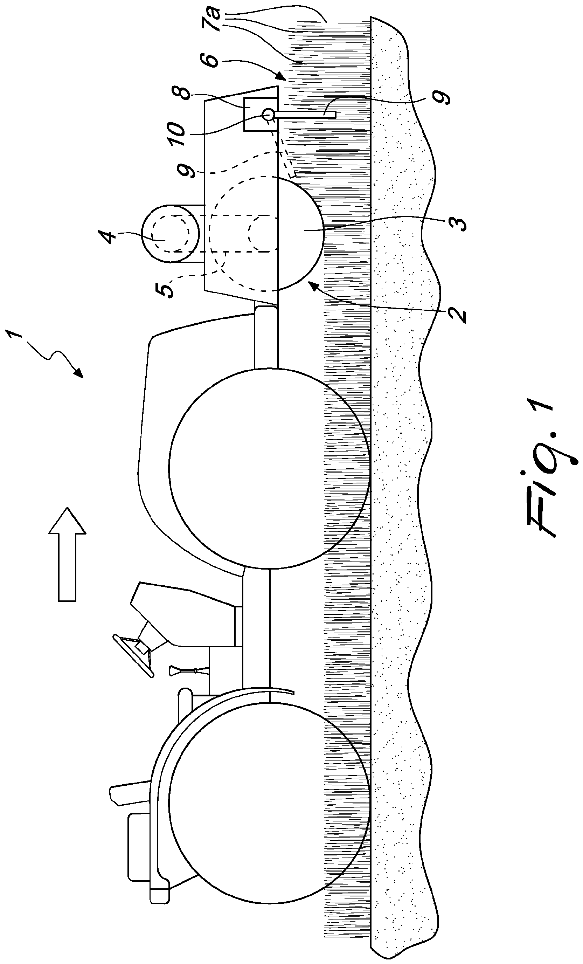

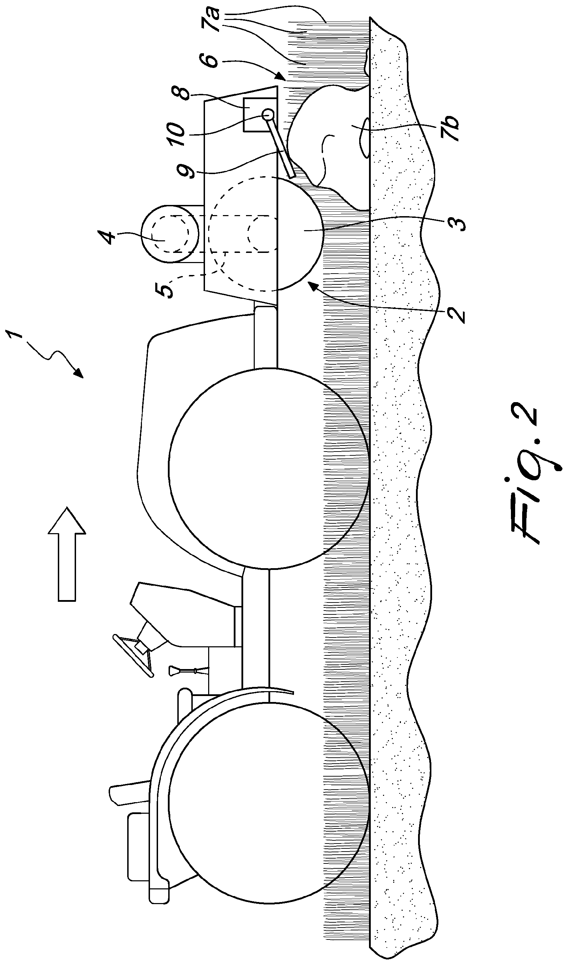

The control rod 10 is rotatably associated with the framework of the tool 2 so that it can move between an inactive position, in which the movable element 9 is arranged by gravity in a substantially vertical position with respect to the ground on which the tool 2 acts, so as to be able to engage the objects 7a entering said work area, as shown in Figure 1, and a maximum detection position, in which the movable element 9 is arranged in a substantially raised and substantially horizontal position with respect to the ground on which the tool 2 works as a consequence of the engagement of an object 7b entering the work area, as shown in Figure 2.

Conveniently, in this case, the transducer that is used is of the mechanical type and comprises an angular position transducer which is associated with the control rod 10 in such a manner as to measure its angular rotation with respect to said inactive position.

The method adapted for safing and/or energy saving which can be performed with the motorized tool for agricultural use that has just been described, in addition to comprising an initial step of detection of objects 7a and/or 7b entering the work area by virtue of the detection means 6, substantially provides for three specific intervention steps.

The first step consists in the intervention of the variator means so as to maintain said working speed of the movable part 3 at a preset minimum speed value that is greater than zero in case of non-detection of objects 7a and/or 7b arranged at the inlet of the work area of the movable part 3.

In other words, this first intervention step occurs in the areas that have already been processed or in the maneuvering areas and the control rod 10 is arranged in its inactive position since the movable element 9 has a substantially vertical position, not encountering any hindrance or obstacle. In this manner, the rotation rate of the rotor of the tool 2 decreases until the preset minimum value is reached, thus providing the energy saving.

The second step consists in the intervention of the variator means in such a manner as to increase the working speed of the movable part 3 from said preset minimum speed value greater than zero to a preset maximum speed value in case of detection of objects 7a arranged at the inlet of the work area of the movable part 3 which is proportional to the height and/or consistency of the objects 7a.

In other words, the second intervention step occurs in the areas yet to be processed and the control rod 10 is arranged in a position that can be defined between its inactive position and its position of maximum detection, since the movable element 9 rotates upward, encountering the objects 7a to be processed. In this manner, the rotation rate of the rotor of the tool 2 increases in relation to the height and/or consistency of the objects 7a to be processed.

The third step consists in the intervention of the variator means so as to stop instantaneously the rotor of the tool 2, bringing to zero the working speed of the movable part 3 in case of detection of the objects 7b located at the inlet of the work area of the movable part 3 and having a height and/or consistency greater than a preset maximum height and/or consistency value.

In other words, the third intervention step occurs with the presence of an object 7b, such as for example a rock or a human limb of an operator who recklessly intervenes in the work area of the tool 2, and the control rod 10 is arranged in its maximum detection position, since the movable element 9 rotates upward, reaching maximum rotation. In this manner, by activating a condition of emergency and/or danger, the rotation rate of the rotor of the tool 2 is stopped immediately, thus providing the safety condition desired to safeguard the tool 2 and/or the operator.

In practice it has been found that the motorized tool for agricultural use, the self-propelled agricultural machine on which said tool is installed, as well as the method adapted for the safing and/or energy saving of said tool, achieve the intended aim and objects, since the detection means with which the tool for agricultural use is provided are a sort of measurement device for the safety and difficulty of the cutting operation and allow a fine and prior adjustment of the speed of the tool for agricultural use with an electric motor drive depending on the work areas involved, further increasing the sensitivity of the inverter/electric motor assembly that turns the rotor of the tool and usually self-adjusts in terms of torque depending on the intensity of the effort in keeping the rotor turning at the set speed.

According to the invention, in this manner the motor in fact self-adjusts also in terms of speed and in advance with respect to the area to be processed that is encountered in each instance, offering the ideal working speed of the rotor of the tool, implementing on the tool an active safety system that is adapted to safeguard the machine itself in case of engagement of bulky and rigid objects and capable of offering an additional protection to the human presences around the tool.

The motorized tool for agricultural use, particularly of the energy-saving type, the self-propelled agricultural machine provided with said tool, and the method adapted for safing and/or energy saving of said tool thus conceived are susceptible of numerous modifications and variations, all of which are within the scope of the appended claims.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A motorized tool (2) for agricultural use, particularly of the energy-saving type, comprising at least one movable part (3) that is adapted to engage objects (7a) to be processed within a work area, means for varying the working speed of said at least one movable part (3), detection means (6) adapted to detect said objects (7a, 7b) entering said work area and functionally associated with said variator means so as to vary automatically the working speed of said at least one movable part (3) between a working speed value equal to zero and a maximum speed value in relation to the presence and/or consistency of said objects (7a, 7b), and means for the electronic management of said variator means which are functionally associated with said detection means (6) in order to process the measurement performed by said detection means (6) and convert it into an electrical signal associated with a predefined working speed value of said at least one movable part (3),
**characterized in that** said detection means (6) are arranged at an inlet of the work area of said at least one movable part (3),
**in that** said electronic management means comprise transducer means (8) which are associated directly with said detection means (6) and comprise at least one transducer of the mechanical type and at least one contactless shape measurement transducer, and
**in that** said detection means (6) comprise at least one movable element (9) which rotates integrally with a control rod (10) arranged above said inlet of said work area of said at least one movable part (3) and transversely with respect to the approach direction of said objects (7a, 7b) and is associated rotatably with the framework of said tool (2) so that it can move between an inactive position, in which said at least one movable element (9) is arranged by gravity in a substantially vertical position with respect to the ground on which said tool (2) works, so as to be able to engage said objects (7a, 7b) entering said work area, and a maximum detection position, in which said at least one movable element (9) is arranged in a position that is raised substantially with respect to the ground on which said tool (2) works as a consequence of the engagement of at least one of said objects (7a, 7b) entering said work area, said at least one transducer of the mechanical type comprising an angular position transducer which is associated with said control rod (10) in such a manner as to measure its angular rotation with respect to said inactive position.

2. The tool (2) according to claim 1, **characterized in that** it is motorized by virtue of motor means (4) of the electric type.

3. A self-propelled agricultural machine (1), particularly of the improved type, **characterized in that** it comprises at least one tool (2) according to claim 1 or 2.

4. The self-propelled agricultural machine (1) according to claim 3, **characterized in that** it is of the type with an electric drive.

5. A method for the safety and/or energy saving of a tool (2) according to claim 1 or 2, **characterized in that** it comprises the following steps:
- detection of said objects (7a, 7b) entering said work area by means of said detection means (6),
- intervention of said variator means so as to maintain said working speed of said at least one movable part (3) at a preset minimum speed value that is greater than zero in case of no detection of said objects (7a, 7b) arranged at said inlet of said work area of said at least one movable part (3),
- intervention of said variator means so as to increase said working speed of said at least one movable part (3) from said preset minimum speed value greater than zero to a preset maximum speed value in case of detection of said objects (7a) arranged at said inlet of said work area of said at least one movable part (3) in a manner which is proportional to the height and/or consistency of said objects (7a),
- intervention of said variator means so as to stop said tool (2) instantaneously, bringing to zero said working speed of said at least one movable part (3) in case of detection of said objects (7b) arranged at said inlet of said work area of said at least one movable part (3), and provided with a height and/or a consistency which are greater than a preset maximum height and/or consistency value.

6. The method according to claim 5, **characterized in that** during said step of intervention of said variator means in such a manner as to maintain said working speed of said at least one movable part (3) at a preset minimum speed value that is greater than zero in case of non-detection of said objects (7a, 7b) arranged at said inlet of said work area of said at least one movable part (3), said control rod (10) is arranged in said inactive position.

7. The method according to claims 5 and 6, **characterized in that** in said step of intervention of said variator means so as to increase said working speed of said at least one movable part (3) from said preset minimum speed value greater than zero to a preset maximum speed value in case of detection of said objects (7a) arranged at said inlet of said work area of said at least one movable part (3) proportionally to the height of said objects (7a), said control rod (10) is arranged in a position that can be defined between said inactive position and said maximum detection position.

8. The method according to claims 5 to 7, **characterized in that**, in said step of intervention of said variator means so as to stop instantaneously said tool (2), bringing to zero said working speed of said at least one movable part (3) in case of detection of said objects (7b) located at said inlet of said work area of said at least one movable part (3) and having a height and/or consistency that is greater than a preset maximum height and/or consistency value, said control rod (10) is arranged in said maximum detection position.

## Patentansprüche

1. Ein motorisiertes Werkzeug (2) für den landwirtschaftlichen Einsatz, insbesondere vom energiesparenden Typ, das Folgendes umfasst: mindestens einen beweglichen Teil (3), welcher ausgebildet ist, um Gegenstände (7a) zu erfassen, die in einem Arbeitsbereich zu verarbeiten sind; Mittel zum Verändern der Arbeitsgeschwindigkeit des mindestens einen beweglichen Teils (3); Erkennungsmittel (6), ausgebildet, um die Gegenstände (7a, 7b) zu erkennen, die in den Arbeitsbereich eintreten, und funktionell mit den Veränderungsmitteln verknüpft, um automatisch die Arbeitsgeschwindigkeit des mindestens einen beweglichen Teils (3) zwischen einem Arbeitsgeschwindigkeitswert gleich null und einem Höchstgeschwindigkeitswert in Bezug auf die Anwesenheit und/oder Konsistenz der Gegenstände (7a, 7b) zu variieren; und Mittel zur elektronischen Verwaltung der Veränderungsmittel, die funktionell mit den Erkennungsmitteln (6) verknüpft sind, um die von den Erkennungsmitteln (6) durchgeführte Messung zu verarbeiten und in ein elektrisches Signal umzuwandeln, das mit einem vordefinierten Arbeitsgeschwindigkeitswert des mindestens einen beweglichen Teils (3) verknüpft ist;
**dadurch gekennzeichnet, dass** die Erkennungsmittel (6) an einem Eingang des Arbeitsbereichs des mindestens einen beweglichen Teils (3) angeordnet sind;
dadurch, dass die elektronischen Verwaltungsmittel Messaufnehmermittel (8) umfassen, die direkt mit den Erkennungsmitteln (6) verknüpft sind und mindestens einen Messaufnehmer vom mechanischen Typ und mindestens einen kontaktlosen Formerfassungs-Messaufnehmer umfassen; und dadurch, dass die Erkennungsmittel (6) mindestens ein bewegliches Element (9) umfassen, das sich integral mit einer Steuerstange (10), welche über dem Eingang des Arbeitsbereichs des mindestens einen beweglichen Teils (3) angeordnet ist, und quer zur Richtung der Annäherung der Gegenstände (7a, 7b) dreht und drehbar mit dem Rahmen des Werkzeugs (2) verbunden ist, so dass es sich zwischen einer inaktiven Position, in der das mindestens eine bewegliche Element (9) durch die Schwerkraft in einer im Wesentlichen vertikalen Position zum Boden angeordnet ist, auf den das Werkzeug (2) einwirkt, um die Gegenstände (7a, 7b) erfassen zu können, die in den Arbeitsbereich eintreten, und einer maximalen Erkennungsposition bewegen kann, in welcher das mindestens eine bewegliche Element (9) in einer Position angeordnet ist, die mit Bezug auf den Boden, auf den das Werkzeug (2) einwirkt, im Wesentlichen angehoben ist infolge des Erfassens mindestens eines der Gegenstände (7a, 7b), die in den Arbeitsbereich eintreten; wobei der mindestens eine Messaufnehmer vom mechanischen Typ einen Winkelstellungs-Messaufnehmer umfasst, der mit der Steuerstange (10) verbunden ist, um ihre Winkelrotation im Verhältnis zu der inaktiven Position zu messen.

2. Das Werkzeug (2) gemäß Anspruch 1, **dadurch gekennzeichnet, dass** es durch Motormittel (4) vom elektrischen Typ angetrieben ist.

3. Eine landwirtschaftliche Maschine (1) mit Eigenantrieb, insbesondere vom verbesserten Typ, **dadurch gekennzeichnet, dass** sie mindestens ein Werkzeug (2) gemäß Anspruch 1 oder 2 umfasst.

4. Die landwirtschaftliche Maschine (1) mit Eigenantrieb gemäß Anspruch 3, **dadurch gekennzeichnet, dass** sie vom Typ mit elektrischem Antrieb ist.

5. Ein Verfahren für die Sicherheit und/oder Energieeinsparung eines Werkzeugs (2) gemäß Anspruch 1 oder 2, **dadurch gekennzeichnet, dass** es folgende Schritte umfasst:
- das Erkennen der Gegenstände (7a, 7b), die in den Arbeitsbereich eintreten, mit Hilfe der Erkennungsmittel (6),
- das Eingreifen der Veränderungsmittel, um die Arbeitsgeschwindigkeit des mindestens einen beweglichen Teils (3) im Falle einer fehlenden Erkennung der Gegenstände (7a, 7b), die an dem Eingang des Arbeitsbereichs des mindestens einen beweglichen Teils (3) angeordnet sind, auf einem vordefinierten Mindestgeschwindigkeitswert zu halten, der größer als null ist,
- das Eingreifen der Veränderungsmittel, um die Arbeitsgeschwindigkeit des mindestens einen beweglichen Teils (3) im Falle der Erkennung der Gegenstände (7a), die an dem Eingang des Arbeitsbereichs des mindestens einen beweglichen Teils (3) angeordnet sind, von dem vordefinierten Mindestgeschwindigkeitswert über null auf einen vordefinierten Höchstgeschwindigkeitswert zu erhöhen, auf eine Art, die proportional zur Höhe und/oder Konsistenz der Gegenstände (7a) ist,
- das Eingreifen der Veränderungsmittel, um das Werkzeug (2) im Falle einer Erkennung der Gegenstände (7b), die an dem Eingang des Arbeitsbereichs des mindestens einen beweglichen Teils (3) angeordnet sind und eine Höhe und/oder Konsistenz haben, die größer sind als ein vordefinierter Maximalhöhen- und/oder -konsistenzwert, sofort anzuhalten und die Arbeitsgeschwindigkeit des mindestens einen beweglichen Teils (3) auf null zu setzen.

6. Das Verfahren gemäß Anspruch 5, **dadurch gekennzeichnet, dass** während des Schritts des Eingreifens der Veränderungsmittel, um die Arbeitsgeschwindigkeit des mindestens einen beweglichen Teils (3) im Falle fehlender Erkennung der Gegenstände (7a, 7b), die an dem Eingang des Arbeitsbereichs des mindestens einen beweglichen Teils (3) angeordnet sind, auf einem vordefinierten Mindestgeschwindigkeitswert zu halten, der größer als null ist, die Steuerstange (10) sich in der inaktiven Position befindet.

7. Das Verfahren gemäß den Ansprüchen 5 und 6, **dadurch gekennzeichnet, dass** während des Schritts des Eingreifens der Veränderungsmittel, um die Arbeitsgeschwindigkeit des mindestens einen beweglichen Teils (3) im Falle der Erkennung der Gegenstände (7a), die an dem Eingang des Arbeitsbereichs des mindestens einen beweglichen Teils (3) angeordnet sind, proportional zur Höhe der Gegenstände (7a) von dem vordefinierten Mindestgeschwindigkeitswert über null auf einen vordefinierten Höchstgeschwindigkeitswert zu erhöhen, die Steuerstange (10) sich in einer Position befindet, die zwischen der inaktiven Position und der maximalen Erkennungsposition definiert sein kann.

8. Das Verfahren gemäß den Ansprüchen 5 bis 7, **dadurch gekennzeichnet, dass** in dem Schritt des Eingreifens der Veränderungsmittel, um das Werkzeug (2) sofort anzuhalten und die Arbeitsgeschwindigkeit des mindestens einen beweglichen Teils (3) im Falle des Erkennens der Gegenstände (7b), die sich an dem Eingang des Arbeitsbereichs des mindestens einen beweglichen Teils (3) befinden und eine Höhe und/oder Konsistenz haben, die größer ist als ein vordefinierter maximaler Höhen- und/oder Konsistenzwert, die Steuerstange (10) sich in der maximalen Erkennungsposition befindet.

## Revendications

1. Outil motorisé (2) à usage agricole, en particulier du type à économie d'énergie, comportant au moins une partie mobile (3) qui est adaptée pour venir en contact avec des objets (7a) devant être traités à l'intérieur d'une zone de travail, des moyens pour faire varier la vitesse de travail de ladite au moins une partie mobile (3), des moyens de détection (6) adaptés pour détecter lesdits objets (7a, 7b) entrant dans ladite zone de travail et fonctionnellement associés auxdits moyens de variation de manière à faire varier automatiquement la vitesse de travail de ladite au moins une partie mobile (3) entre une valeur de vitesse de travail égale à zéro et une valeur de vitesse maximale en lien avec la présence et/ou la consistance desdits objets (7a, 7b), et des moyens pour la gestion électronique desdits moyens de variation qui sont fonctionnellement associés auxdits moyens de détection (6) afin de traiter la mesure réalisée par lesdits moyens de détection (6) et de la convertir en un signal électrique associé à une valeur de vitesse de travail prédéfinie de ladite au moins une partie mobile (3),
**caractérisé en ce que** lesdits moyens de détection (6) sont agencés à une entrée de la zone de travail de ladite au moins une partie mobile (3),
**en ce que** lesdits moyens de gestion électronique comportent des moyens transducteurs (8) qui sont directement associés auxdits moyens de détection (6) et comportent au moins un transducteur du type mécanique et au moins un transducteur de mesure de forme sans contact, et
**en ce que** lesdits moyens de détection (6) comportent au moins un élément mobile (9) qui tourne d'un seul tenant avec une tige de commande (10) agencée au-dessus de ladite entrée de ladite zone de travail de ladite au moins une partie mobile (3) et transversalement par rapport à la direction d'approche desdits objets (7a, 7b) et est associée en rotation au bâti dudit outil (2) de sorte qu'il peut bouger entre une position inactive, dans laquelle ledit au moins un élément mobile (9) est agencé par gravité dans une position sensiblement verticale par rapport au sol sur lequel ledit outil (2) travaille, de manière à pouvoir venir en contact avec lesdits objets (7a, 7b) entrant dans ladite zone de travail, et une position de détection maximale, dans laquelle ledit au moins un élément mobile (9) est agencé dans une position qui est sensiblement relevée par rapport au sol sur lequel ledit outil (2) travaille en conséquence du contact avec au moins un desdits objets (7a, 7b) entrant dans ladite zone de travail, ledit au moins un transducteur du type mécanique comportant un transducteur de position angulaire qui est associé à ladite tige de commande (10) de telle manière à mesurer sa rotation angulaire par rapport à ladite position inactive.

2. Outil (2) selon la revendication 1, **caractérisé en ce qu'**il est motorisé par des moyens moteurs (4) du type électrique.

3. Machine agricole autopropulsée (1), en particulier du type amélioré, **caractérisée en ce qu'**elle comporte au moins un outil (2) selon la revendication 1 ou 2.

4. Machine agricole autopropulsée (1) selon la revendication 3, **caractérisée en ce qu'**elle est du type avec un entraînement électrique.

5. Procédé pour la sécurité et/ou l'économie d'énergie d'un outil (2) selon la revendication 1 ou 2, **caractérisé en ce qu'**il comporte les étapes suivantes :
- détection desdits objets (7a, 7b) entrant dans ladite zone de travail au moyen desdits moyens de détection (6),
- intervention desdits moyens de variation de manière à maintenir ladite vitesse de travail de ladite au moins une partie mobile (3) à une valeur de vitesse minimale préréglée qui est supérieure à zéro en cas de non-détection desdits objets (7a, 7b) agencés à ladite entrée de ladite zone de travail de ladite au moins une partie mobile (3),
- intervention desdits moyens de variation de manière à augmenter ladite vitesse de travail de ladite au moins une partie mobile (3) à partir de ladite valeur de vitesse minimale préréglée supérieure à zéro jusqu'à une valeur de vitesse maximale préréglée en cas de détection desdits objets (7a) agencés à ladite entrée de ladite zone de travail de ladite au moins une partie mobile (3) d'une manière qui est proportionnelle à la hauteur et/ou à la consistance desdits objets (7a),
- intervention desdits moyens de variation de manière à arrêter ledit outil (2) instantanément, en amenant à zéro ladite vitesse de travail de ladite au moins une partie mobile (3) en cas de détection desdits objets (7b) agencés à ladite entrée de ladite zone de travail de ladite au moins une partie mobile (3), et fourni avec une hauteur et/ou une consistance qui sont supérieures à une valeur de hauteur et/ou de consistance maximale préréglée.

6. Procédé selon la revendication 5, **caractérisé en ce que** pendant ladite étape d'intervention desdits moyens de variation de telle manière à maintenir ladite vitesse de travail de ladite au moins une partie mobile (3) à une valeur de vitesse minimale préréglée qui est supérieure à zéro en cas de non-détection desdits objets (7a, 7b) agencés à ladite entrée de ladite zone de travail de ladite au moins une partie mobile (3), ladite tige de commande (10) est agencée dans ladite position inactive.

7. Procédé selon les revendications 5 et 6, **caractérisé en ce qu'**à ladite étape d'intervention desdits moyens de variation de manière à augmenter ladite vitesse de travail de ladite au moins une partie mobile (3) à partir de ladite valeur de vitesse minimale préréglée supérieure à zéro jusqu'à une valeur de vitesse maximale préréglée en cas de détection desdits objets (7a) agencés à ladite entrée de ladite zone de travail de ladite au moins une partie mobile (3) proportionnellement à la hauteur desdits objets (7a), ladite tige de commande (10) est agencée dans une position qui peut être définie entre ladite position inactive et ladite position de détection maximale.

8. Procédé selon les revendications 5 à 7, **caractérisé en ce que**, à ladite étape d'intervention desdits moyens de variation de manière à arrêter instantanément ledit outil (2), en amenant à zéro ladite vitesse de travail de ladite au moins une partie mobile (3) en cas de détection desdits objets (7b) situés à ladite entrée de ladite zone de travail de ladite au moins une partie mobile (3) et ayant une hauteur et/ou une consistance qui est supérieure à une valeur de hauteur et/ou de consistance maximale préréglée, ladite tige de commande (10) est agencée dans ladite position de détection maximale.
